# EUROPÄISCHE PATENTSCHRIFT

(11) **EP 3 847 419 B1**
(45) Veröffentlichungstag und Bekanntmachung des Hinweises auf die Patenterteilung: **27.04.2022**
(21) Anmeldenummer: 19762434.9
(22) Anmeldetag: 06.09.2019
(51) Int. Cl.: G01D 5/00, G01D 11/24

(54) **DREHGEBER MIT ELASTISCHEM ELEMENT ZUR BEFESTIGUNG EINER KODIERSCHEIBE**
ROTARY ENCODER WITH ELASTIC ELEMENT FOR FIXING A SHAFT ENCODER
CAPTEUR DE ROTATION POURVU D'ÉLÉMENT ÉLASTIQUE DESTINÉ À LA FIXATION D'UN DISQUE DE CODAGE

(30) Priorität: 07.09.2018 EP 18193173
(43) Veröffentlichungstag der Anmeldung: 14.07.2021
(73) Patentinhaber: fruitcore robotics GmbH, 78467 Konstanz (DE)
(72) Erfinder: FLAIG, Adrian, 78467 Konstanz (DE); FREY, Manuel Tobias, 78467 Konstanz (DE); RIEGGER, Jens Robert, 78462 Konstanz (DE); KUENTZLE, Tobias, 76135 Karlsruhe (DE); FÜSSL, Johannes, 78464 Konstanz (DE)
(74) Vertreter: Grünecker Patent- und Rechtsanwälte PartG mbB
(86) Internationale Anmeldenummer: PCT/EP2019/073903
(87) Internationale Veröffentlichungsnummer: WO 2020/049179

(56) Entgegenhaltungen:
- EP-A2- 1 517 121
- DE-A1- 19 739 012
- DE-A1-102004 022 770
- DE-B4-102005 063 428
- JP-A- 2005 320 785

## Beschreibung

Die vorliegende Erfindung betrifft einen Drehgeber, der ein Gehäuse, eine Welle und eine Kodierscheibe umfasst, die auf der Welle befestigt ist, sowie weiterhin einen Lesekopf, der ausgelegt ist, die Drehung der Kodierscheibe zu erfassen. Die Erfindung betrifft weiterhin ein Verfahren zur Montage eines Drehgebers.

Bekannte Drehgeber umfassen als zentrale Elemente einen Lesekopf und eine Kodierscheibe, die mit einer Welle rotiert, deren relative Verdrehung zum Lesekopf erfasst werden soll. Es ist entscheidend, dass die Kodierscheibe in einer exakten Position relativ zum Lesekopf rotiert, wobei sowohl die Position der Kodierscheibe als auch deren Rundlauf auf der Welle gewährleistet werden sollen.

Die DE 10 2005 063428 B4 offenbart eine Tür-Betätigungsvorrichtung mit elektromagnetischer Kupplung, die eine Tür eines Fahrzeugs öffnet und schließt, und insbesondere eine Tür-Betätigungsvorrichtung, die einen Detektor beinhaltet, der eine Drehung durch eine Antriebsquelle detektiert.

Aus der US 6,166,374 ist es bekannt, dass eine Kodierscheibe bei der Montage durch ein im Drehgeberdeckel gelagertes Element nach unten gedrückt wird, sodass die Strichscheibe in eine gewünschte Position gebracht wird, die durch Kontakt des Elements mit Anschlägen bestimmt wird. Dann wird das Element wieder aus dem Kontakt mit der Strichscheibe genommen. Im Stand der Technik ist es insbesondere bekannt, die Kodierscheibe gegenüber einem Absatz in der Welle durch Verschrauben oder Kleben zu befestigen. So wird in dem US-Patent US 5,045,691 offenbart, dass eine Kodierscheibe in Form einer Strichscheibe zwischen Beilagscheiben mittels einer Mutter auf einem Wellenvorsprung befestigt wird.

Eine Befestigung durch Verschrauben ist aber nachteilig, da das Verschrauben relativ aufwendig ist, und zusätzlichen Bauraum erfordert.

Eine Befestigung durch Kleben kann sich dahingegen negativ auf die Genauigkeit der Positionierung der Kodierscheibe auswirken, da in Abhängigkeit der Menge des aufgebrachten Klebstoffs die Position der Scheibe variieren kann. Weiterhin besteht durch den Klebstoff Verschmutzungsgefahr. Zudem muss beim Aushärteprozess eine bestimmte Aushärtezeit eingehalten werden und ein sehr präziser Anpressdruck aufgebracht werden, was den Montageprozess deutlich verkompliziert.

Im Stand der Technik weisen durch ein Gehäuse geschlossene Drehgeber oft eine relativ große Höhe in Axialrichtung auf, und sind deswegen bei wenig Bauraum nur schwierig einsetzbar. Deswegen kommen oft offene Drehgeber zum Einsatz, die ohne Gehäuse ausgeliefert werden, aber äußerst schwierig zu verbauen sind, da die Kodierscheibe leicht beschädigt oder ungenau montiert werden kann.

Die Aufgabe der vorliegenden Erfindung ist es, einen einfach zu montierenden und dennoch präzisen und betriebssicheren Drehgeber bereitzustellen.

Erfindungsgemäß wird ein Drehgeber bereitgestellt, der ein Gehäuse, eine Welle, eine Kodierscheibe, die auf der Welle befestigt ist, und einen Lesekopf umfasst, wobei letzterer ausgelegt ist, die Drehung der Kodierscheibe zu erfassen. Die Kodierscheibe ist dabei auf einer axialen Seite durch einen Anschlag in ihrer axialen Position festgelegt, wobei auf der anderen axialen Seite der Drehscheibe ein elastisches Element vorgesehen ist, das eine Klemmkraft bereitstellt, mit der die Kodierscheibe gegen den Anschlag gedrückt wird.

Der Anschlag definiert die Position der Kodierscheibe in axialer Richtung, und das elastische Element stellt die notwendige Haltekraft bereit, sodass die Kodierscheibe in axialer Richtung auf dem Anschlag gehalten wird.

Die Kodierscheibe wird also zwischen dem insbesondere fest in seiner Position zur Welle definierten Anschlag und dem elastischen Element gelagert.

Der erfindungsgemäße Drehgeber kann durch das Einklemmen der Kodierscheibe mit weniger Bearbeitungsschritten montiert werden, ermöglicht aber gleichzeitig eine exakte und betriebssichere Befestigung der Kodierscheibe auf der Welle. Auf zusätzliche Befestigungen wie Schrauben oder Kleben kann verzichtet werden. Durch die direkte Anlage der Kodierscheibe am Anschlag kann eine sehr exakte Positionierung der Kodierscheibe erreicht werden.

Insbesondere kann durch die axiale Haltekraft auch ein Reib- bzw. Kraftschluss in Umfangsrichtung und/oder Radialrichtung zwischen der Kodierscheibe und dem Anschlag bewirkt werden, sodass auch eine Festlegung der Position der Kodierscheibe in diesen Richtungen ermöglicht wird.

Es ist alternativ oder zusätzlich möglich, dass ein Formschluss in radialer Richtung und/oder Umfangsrichtung zwischen der Kodierscheibe und dem Anschlag vorgesehen wird, beispielsweise durch komplementäre Elemente auf dem Anschlag und der Kodierscheibe, die ineinander eingesetzt werden. Beispielsweise können Erhebungen oder Stifte auf dem Anschlag vorgesehen sein, die in Öffnungen der Kodierscheibe eingreifen.

Die Kodierscheibe kann mit optischen Kodierelementen oder magnetischen Kodierelementen versehen sein, wobei der Lesekopf entsprechend angepasst ist. Die optischen Kodierelemente sind insbesondere auf der Ober- und/oder Unterseite der Kodierscheibe vorgesehen. Der Lesekopf ist dann vorteilhafterweise U-förmig von der Seite über und unter der Kodierscheibe angeordnet. Die magnetischen Kodierelemente können alternativ nur entlang des äußeren Umfangs der Kodierscheibe vorgesehen sein. Der Lesekopf kann dann in radialer Richtung an die Kodierscheibe angrenzend angeordnet sein.

Bei der Kodierscheibe handelt es sich insbesondere um eine Strichscheibe, auf der entlang des Umfangs mehrere sich in Radialrichtung erstreckende Striche vorgesehen sind, die von einem optischen Lesekopf erfasst werden können. Alternativ können magnetische Striche vorgesehen sein. Der Lesekopf kann jedenfalls die Kodierelemente erfassen, wenn diese an ihm vorbei bewegt werden und somit in Abhängigkeit der Auflösung der Kodierelemente die Verdrehung der Welle gegenüber dem Lesekopf bzw. Gehäuse feststellen. Die Auflösung wird durch die Anzahl der in Umfangsrichtung auf der Kodierscheibe aufgebrachten Kodierelementen bestimmt. Der Lesekopf ist insbesondere im Gehäuse befestigt. Alternativ kann der Lesekopf aber auch außen am Gehäuse oder unabhängig vom Gehäuse in einer vorbestimmten Position relativ zum Gehäuse angeordnet und befestigt werden. Beispielsweise können der Lesekopf und das Gehäuse auf einer gemeinsamen Grundplatte oder Befestigungsfläche angeordnet und befestigt werden. Der Lesekopf weist insbesondere ein Sensorelement, eine Platine, sowie Mikroelektronik zum Auswerten der Messwerte des Sensorelements auf.

Das elastische Element hat insbesondere einen Innendurchmesser zwischen 5 mm und 250 mm, vorteilhafterweise zwischen 10 mm und 100 mm, weiter vorteilhafterweise zwischen 20 mm und 50 mm. Je nach Anwendungsfall können aber auch weit größere oder geringere innere Durchmesser des elastischen Elements vorgesehen werden. Für die vorgenannten Durchmesser liegt die Dicke des elastischen Elements in Axialrichtung insbesondere zwischen 0,3 mm und 20 mm, vorteilhafterweise zwischen 0,5 mm und 3 mm, je nach Material des elastischen Elements. Für andere Durchmesser des elastischen Elements wird die Dicke des elastischen Elements insbesondere proportional angepasst.

Insbesondere wird das eingebaute elastische Element um wenigstens 5 % komprimiert, vorteilhafterweise wird es um wenigstens 25 % komprimiert, in anderen Ausführungsformen sogar um wenigstens 40 % oder wenigstens 70% komprimiert. Die Shore-Härte des elastischen Elements liegt insbesondere zwischen 30 und 90 Shore HSc, HSd, vorteilhafterweise bei ca. 65 bis 75 Shore HSc, HSd, und in einer Ausführungsform bei ca. 70 Shore HSc, HSd.

Der Anschlag für die Kodierscheibe kann auch durch eine ebene Stirnseite der Welle bereitgestellt werden. Die Kodierscheibe wird dann vorteilhafterweise zwischen einem Axiallager und die Stirnseite der Welle geklemmt.

Das elastische Element kann entweder direkt an der Kodierscheibe oder in einem Abstand zu dieser angeordnet werden. In letzterer Ausgestaltung können zwischen dem elastischen Element und der Kodierscheibe andere, steife bzw. inkompressible, in Axialrichtung verschiebliche Elemente vorgesehen sein.

In einer bevorzugten Ausführungsform erstreckt sich das elastische Element in Umfangsrichtung um die Welle. Damit kann eine gleichmäßige Verteilung der Klemmkraft erreicht werden. In anderen Ausführungsformen ist es aber auch möglich, dass mehrere elastische Elemente vorgesehen sind, die unabhängig und in Abstand voneinander in Umfangsrichtung vorgesehen sind. Beispielsweise können mehrere kleine Druckfedern um den Umfang verteilt werden. Vorteilhafterweise sind diese in gleichmäßigen Abständen angeordnet, um eine gleichmäßige Klemmkraft bereitzustellen.

Vorteilhafterweise ist ein erstes Lager der Welle so angeordnet, dass die Klemmkraft über das elastische Element und das erste Lager in das Gehäuse eingeleitet wird. Dabei wird insbesondere die axiale Vorspannkraft des ersten Lagers durch das elastische Element bereitgestellt und folglich auch als Klemmkraft für die Kodierscheibe genutzt. Das elastische Element stellt somit nicht nur die notwendige Klemmkraft bereit, sondern ermöglicht auch einen Toleranzausgleich bezüglich der Lagerverspannung. Die Kodierscheibe wird also zwischen dem inneren Ring des ersten Lagers und dem Anschlag eingeklemmt, wobei zwischen dem Innenring des ersten Lagers und der Kodierscheibe nicht nur das elastische Element, sondern auch weitere axial verschiebliche Bauteile vorgesehen sein können.

Insbesondere ist zwischen dem elastischen Element und dem Innenring des ersten Lagers wenigstens eine Distanzhülse vorgesehen, die sich zylindrisch um die Welle erstreckt. Zusätzlich oder alternativ können ein oder mehrere Distanzringe an entsprechender Stelle vorgesehen sein.

Somit kann der notwendige Bauraum geschaffen werden, um je nach Typ des ersten Lagers und Lesekopfs genügend Abstand zwischen diesen zu gewährleisten. Alternativ ist es auch möglich, dass das elastische Element eine gewisse Erstreckung in axialer Richtung aufweist, und somit diesen Bauraum allein bereitstellen kann. Die Distanzhülsen können auch gewährleisten, dass die Klemmkraft von der Distanzhülse präzise auf den Innenring des ersten Lagers aufbringt.

Vorteilhafterweise ist die Welle als Hohlwelle gestaltet, ist also wenigstens bereichsweise mit einem zylindrischen Hohlraum im radial inneren Bereich versehen. Der zylindrische Hohlraum stellt insbesondere eine Montagebuchse bereit. In der Welle kann im Bereich der Montagebuchse wenigstens eine sich in radialer Richtung erstreckende Gewindebohrung vorgesehen sein, in der zur Befestigung eines Bauteils in der Montagebuchse eine Schraube eingebracht werden kann. Alternativ kann eine Befestigung von Bauteilen in der Montagebuchse über einen Sicherungsstift oder andere Befestigungselemente erfolgen.

Die Ausführung als Hohlwelle ermöglicht, dass die Welle einfach mit einem externen Bauteil, beispielsweise einer weiteren Welle verbunden werden kann, dessen Verdrehung der Drehgeber erfassen soll. Durch die Hohlwelle, wird der Radius der inneren Öffnung der Kodierscheibe vergleichsweise groß, sodass hohe Anforderungen an Genauigkeit und Betriebssicherheit der Befestigung der Kodierscheibe vorliegen. Diese werden aber durch die erfindungsgemäße Ausgestaltung erfüllt.

Insbesondere ermöglicht die erfindungsgemäße Gestaltung, dass ein großer Innendurchmesser der Hohlwelle erreicht werden kann, bzw. dass das Gehäuse relativ zu diesem großen Innendurchmesser relativ flach ausgestaltet werden kann. So kann insbesondere ein Innendurchmesser der Hohlwelle erreicht werden, der wenigstens die halbe Höhe des Gehäuses in Axialrichtung aufweist, vorteilhafterweise sogar größer als die Gehäuseerstreckung in Axialrichtung ist.

In einer Ausführungsform wird der Anschlag für die Kodierscheibe durch einen Absatz in der Welle bereitgestellt. Dieser Absatz wird insbesondere durch eine Durchmesserveränderung der Welle bereitgestellt, vorteilhafterweise mit einer zur Axialrichtung normalen Anschlagsfläche. Somit kann mit äußerster Präzision die Position der Kodierscheibe bezüglich der Welle festgelegt werden.

In einer anderen Ausführungsform ist es auch möglich, dass der Anschlag ein Distanzring ist, der insbesondere auf einem Absatz in der Welle angeordnet ist. Dies ermöglicht größere Flexibilität bei der axialen Positionierung der Kodierscheibe, was insbesondere vorteilhaft sein kann, wenn mit Gleichteilen mehrere verschiedene Versionen des Drehgebers gefertigt werden sollen. Die Distanzhülse, bzw. der Distanzring, ist so ausgelegt, dass durch die Klemmkraft keine Verformung des Distanzrings in axialer Richtung bewirkt wird, bzw. dass diese Verformung unter der Toleranzgrenze verbleibt.

In einer Ausführungsform ist die Welle mit dem ersten Lager als Radiallager in einem oberen Gehäuseteil des Gehäuses gelagert, und auf der gegenüberliegenden Seite mit einem zweiten Lager als Axiallager in einem unteren Gehäuseteil. Somit wird mittels des Axiallagers und dem dadurch in Axialrichtung genau definiert festgelegten Anschlag eine präzise axiale Positionierung der Kodierscheibe ermöglicht. Das Radiallager ist vorteilhafterweise so ausgestaltet, dass es zumindest die axiale Klemmkraft auf das obere Gehäuseteil übertragen kann.

Insbesondere ermöglicht die Ausgestaltung mit dem zweiten Lager als reines Axiallager, dass keine durchgehende Welle notwendig ist. Das Gehäuse kann mit dem unteren Gehäuseteil vollständig abgeschlossen werden. Zudem kann eine nur von einer Seite bearbeitete Welle verwendet werden.

Vorteilhafterweise kann das zweite Lager als Gleitlager in Form einer aus einer Vertiefung des unteren Gehäuseteils vorstehenden Anlaufscheibe ausgebildet sein. Zwischen der Anlaufscheibe und dem unteren Gehäuseteil kann eine dünne Metallscheibe, bspw. eine Stahlscheibe, als Gleitpartner der Anlaufscheibe vorgesehen sein. Die Metallscheibe kann durch Verkleben am unteren Gehäuseteil befestigt werden. Eine entsprechende Lagergestaltung ist auch für das erste Lager möglich. Dadurch wird eine äußerst kompakte und einfach zu montierende Ausgestaltung des Drehgebers ermöglicht.

Das erste Lager kann insbesondere eine Gleitlagerung der Welle im oberen Gehäuseteil sein, wobei die Klemmkraft durch eine Distanzhülse in die Gleitlagerung eingeleitet wird. Alternativ kann an dieser Stelle für das erste Lager auch eine Wälzlagerung vorgesehen sein.

In einer Ausführungsform ist der Lesekopf zwischen dem oberen Gehäuseteil und dem unteren Gehäuseteil angeordnet, insbesondere in direktem Kontakt mit dem oberen und unteren Gehäuseteil. Am unteren Gehäuseteil und/oder am oberen Gehäuseteil können Positionierstifte vorgesehen sein, die eine Befestigung des Lesekopfs in definierter Position ermöglichen.

Es ist allerdings auch möglich, dass das untere Gehäuseteil oder das obere Gehäuseteil weggelassen wird, und der entsprechend ausgestaltete Drehgeber auf einer Montagefläche montiert wird, die den entsprechenden Abschluss des Gehäuses und eine Lagerseite bzw. Lageraufnahme bereitstellt. Dadurch kann eine noch kompaktere Ausgestaltung des Drehgebers ermöglicht werden.

In einer Ausführungsform ist ein Flansch an einem Ende der Welle vorgesehen, wobei der Flansch mittels einem Axiallager, insbesondere dem zweiten Lager, gegenüber dem Gehäuse gelagert wird, und wobei die Rückseite des Flansches den Anschlag bereitstellt. Somit kann der Flansch in Doppelfunktion zwei vorteilhafte Funktionen übernehmen. Zudem wird durch eine derartige Gestaltung die Bauhöhe in Axialrichtung gering gehalten.

Vorteilhafterweise ist das elastische Element ein ringförmiges oder zylindrisches Elastomerelement, insbesondere aus Gummi bzw. Naturkautschuk oder aus einem synthetischen Elastomer, wie z.B. Silikon. Beispielsweise kann Moosgummi, also geschlossenporiger, elastischer Schaumstoff, zum Einsatz kommen. Insbesondere kann das elastische Element in Form eines Dichtungsrings vorgesehen werden.

Alternativ kann das elastische Element aus Metall bestehen, wobei dann die Elastizität vornehmlich durch die Geometrie des elastischen Elements bestimmt wird. Beispielsweise können dünne Beilagscheiben oder Absatzscheiben aus Metall zum Einsatz kommen, die über einen Absatz in der Welle elastisch verformt werden und dadurch Vorspannung aufbringen können. Weiterhin können als elastisches Element Druckfedern aus Metall eingesetzt werden, entweder eine große Druckfeder, die sich um den Umfang der Welle erstreckt oder mehrere kleine Druckfedern, die entlang des Umfangs der Welle angeordnet sind. Insbesondere kann eine oder mehrere Spiralfedern zum Einsatz kommen.

Das elastische Element, die Kodierscheibe und/oder der Anschlag können zumindest bereichsweise mit einer aufgerauten Oberfläche ausgestaltet sein, um eine präzise Festlegung der Position der Kodierscheibe durch Reibkräfte sicherzustellen. Es ist möglich, dass das elastische Element mit einer doppelseitigen Klebefläche versehen ist, um eine bessere Positionierung zu gewährleisten. Dennoch erfolgt das eigentliche Festlegen des elastischen Elements durch die Klemmkraft, d. h. es ist nur eine relativ dünne Klebefläche notwendig und zudem muss nicht auf ein Aushärten gewartet werden, da die Klemmkraft die Festbelegung der Position des elastischen Elements sicherstellt. Beispielsweise kann das elastische Element ein doppelseitig klebender Moosgummiring oder eine Moosgummibeilagscheibe sein. Es ist auch möglich mehrere elastische Elemente nacheinander in Axialrichtung vorzusehen, um durch deren Kombination die gewünschte Elastizität zur Erzeugung der Klemmkraft zu erreichen. Dies kann insbesondere vorteilhaft sein, wenn mehrere verschiedene Varianten des Drehgebers gefertigt werden, die unterschiedliche Baulängen haben oder unterschiedliche Klemmkräfte benötigen.

Vorteilhafterweise ist das elastische Element eine Tellerfeder oder Fingerfeder, in deren zentralen Öffnung die Welle angeordnet ist. Durch die Tellerfeder oder Fingerfeder kann auf sehr kompakten Raum eine hohe Klemmkraft ermöglicht werden. Insbesondere besteht die Tellerfeder oder Fingerfeder aus Metall, wobei sie alternativ oder ergänzend aus einem Polymerwerkstoff bestehen kann.

Das erste und/oder zweite Lager kann als Axiallager und/oder Radiallager ausgeführt sein. Insbesondere können das erste und/oder zweite Lager als Wälzlager ausgeführt sein, beispielsweise als Rillenkugellager, Axialrollenlager, Axialnadellager, Schrägkugellager, Kegellager oder Zylinderlager. Besonders vorteilhaft können Rillenkugellager bzw. Dünnringlager sein. Die Lagerringe der Wälzlager können je nach Material des Gehäuses bzw. der Welle integral durch das Gehäuse und oder durch die Welle ausgebildet werden. Alternativ können gewöhnliche Lagerringe als integraler Bestandteil des Lagers zum Einsatz kommen.

Das erste und/oder zweite Lager kann aber auch vorteilhafterweise als Gleitlager bzw. Anlaufscheibe aus Kunststoff, Keramik, Metall, insbesondere Sinterbronze, oder ähnlichen gleitenden Materialien, gestaltet werden. Die Gleitlagerflächen können durch separate Elemente auf der Welle und im Gehäuse bereitgestellt werden. Alternativ kann das Gehäuse und/oder die Welle wenigstens bereichsweise aus einem geeigneten Werkstoff bestehen, damit diese Elemente direkt als Gleitlagerung eingesetzt werden können.

Die Erfindung stellt weiterhin ein Verfahren zur Montage eines Drehgebers bereit, das die folgenden Schritte aufweist, die in dieser, umgekehrter oder beliebiger Reihenfolge ausgeführt werden können, nämlich i) Bereitstellen eines unteren Gehäuseteils mit einem unteren Lager, ii) Einbringen einer Welle in den unteren Gehäuseteil, iii) Anordnen einer Kodierscheibe und eines elastischen Elements auf der Welle, und iv) Anordnen und Befestigen eines oberen Gehäuseteils mit einem oberen Lager auf dem unteren Gehäuseteil, sodass die Welle durch das obere Lager und das untere Lager gelagert ist, und durch das obere Lager eine Klemmkraft über das elastische Element aufgebracht wird, sodass die Kodierscheibe gegen einen Anschlag auf der Welle gedrückt wird.

Das Einbringen der Welle in den unteren Gehäuseteil kann vor oder nach dem Anordnen der Kodierscheibe und des elastischen Elements auf der Welle erfolgen. Der obere Gehäuseteil und/oder untere Gehäuseteil kann mit einer Öffnung versehen sein, die eine Verbindung eines externen Bauteils mit der Welle ermöglicht.

Die Erfindung stellt ein weiteres Verfahren zur Montage eines Drehgebers bereit, bei dem ein unteres Gehäuseteil mit einem unteren Lager bereitgestellt wird; eine Kodierscheibe, ein elastisches Element und ein oberes Lager auf einer Welle angeordnet werden; die Welle in ein oberes Gehäuseteil eingebracht wird; und das obere Gehäuseteil auf dem unteren Gehäuseteil angeordnet und befestigt wird, sodass die Welle durch das obere Lager und das untere Lager gelagert ist, und durch das obere Lager eine Klemmkraft über das elastische Element aufgebracht wird, sodass die Kodierscheibe gegen einen Anschlag auf der Welle gedrückt wird.

Das erfindungsgemäße Festklemmen der Kodierscheibe durch das elastische Element ist vorteilhaft bezüglich Montageaufwand und Positionierungsgenauigkeit. Zudem kann das elastische Element in einer vorteilhaften Ausführungsform auch die Lagervorspannkraft bestimmen, sodass dadurch zwei relevante Kräfte im System in Einklang gebracht werden, nämlich die Vorspannkraft in axialer Richtung für die Lager und die Klemmkraft für die Kodierscheibe.

Die Erfindung kommt insbesondere in einem durch das Gehäuse wenigstens teilweise geschlossenen Drehgeber zum Einsatz, der vormontiert verbaut werden kann. Deswegen muss die Genauigkeit der Anordnung der Kodierscheibe ab der Montage sichergestellt werden.

Bei dem vorgenannten geschlossenen Drehgeber sind dann aber weniger Schritte beim Verbauen des Drehgebers am tatsächlichen Einsatzort notwendig, da die Kodierscheibe vor Verschmutzung und mechanischer Beschädigung im vormontierten Gehäuse geschützt ist.

Die Erfindung bietet eine vorteilhafte Weiterentwicklung, da der Drehgeber in Axialrichtung äußerst flach aufgebaut sein kann, und dennoch einen guten Schutz und eine präzise Festlegung der Kodierscheibe sicherstellt. Insbesondere wird durch den erfindungsgemäßen Drehgeber eine kompakte geschlossene Baugruppe ermöglicht, und dadurch eine hohe Zuverlässigkeit bezüglich Rundlauf bereitgestellt. Zudem kann ein guter Schutz vor Verschmutzung erreicht werden.

Trotz der kompakten Ausgestaltung in Axialrichtung ist es insbesondere mittels der Hohlwelle möglich, den erfindungsgemäßen Drehgeber an Wellen mit großem Durchmesser zu befestigen. Durch den möglichen großen Durchmesser der Kodierscheibe, kann die Kodierscheibe mit vielen Kodierelementen unterteilt werden, wodurch eine hohe Auflösung ermöglicht wird.

Der erfindungsgemäße Drehgeber kann einfach verbaut werden, ohne dass dabei noch die Kodierscheibe ausgerichtet werden muss. Zudem ist eine einfache Integration in weitere Baugruppen möglich, ohne dass die Messsensorik beschädigt oder verschmutzt wird. Der Drehgeber kann als Inkrementalgeber oder als Absolutwertgeber ausgeführt werden.

Die Kodierscheibe wird mithilfe des elastischen Elements, das insbesondere in Form eines Toleranzausgleichs- und Klemmelements gestaltet ist, eingeklemmt und somit fixiert. Somit wird durch die Fixierung die Position der Kodierscheibe festgelegt. Dies kann gleichzeitig mit der Vorspannung der Lagerung geschehen, wobei insbesondere dann die Vorspannkraft der Lagerung der Klemmkraft entspricht. Jedenfalls wird dadurch eine exakte und kippfreie Positionierung der Kodierscheibe erreicht.

Das Gehäuse und/oder die Welle können insbesondere aus Aluminium ausgeführt sein. In diesem Fall ist es allerdings vorteilhaft zumindest Anlaufscheiben vorzusehen, vorteilhafterweise Gleitlager oder Wälzlager. Alternativ können die Welle und/oder das Gehäuse aber auch direkt aus Materialien, die gute Gleiteigenschaften besitzen, hergestellt werden, wodurch eine direkte Gleitlagerung der Welle im Gehäuse möglich ist. Dafür kann beispielsweise Stahl oder Bronze, aber auch ein Polymerwerkstoff, zum Einsatz kommen.

Erfindungsgemäß wird weiterhin ein Drehgeber bereitgestellt, mit einer Welle, die einen Anschlag zur unmittelbaren oder mittelbaren Befestigung einer Kodierscheibe aufweist, wobei die Welle durch ein reines axiales Lager auf einer Seite des Anschlags und ein Radiallager auf der anderen Seite des Anschlags gelagert ist. Folglich ist keine durch das Gehäuse voll durchgehende Welle notwendig, und das Gehäuse kann insbesondere auf der Seite der Axiallagerung einfach und flach abgeschlossen werden. Zudem muss eine derartige Welle nur von einer Seite in einer Drehmaschine bearbeitet werden, da nur ein Absatz für den axialen Anschlag für die Kodierscheibe notwendig ist. Nachdem auf den erfindungsgemäßen Drehgeber nur geringe Kippkräfte wirken, ist die Verkippsteifigkeit des Radiallagers für die meisten Einsatzzwecke ausreichend.

Die Erfindung wird im Folgenden anhand von beispielhaften Ausführungsformen weitergehend beschrieben.
Figur 1 zeigt eine seitliche Schnittansicht einer ersten Ausführungsform eines erfindungsgemäßen Drehgebers.
Figur 2 zeigt eine seitliche Schnittansicht einer zweiten Ausführungsform eines erfindungsgemäßen Drehgebers.
Figur 3 zeigt eine seitliche Schnittansicht einer dritten Ausführungsform eines erfindungsgemäßen Drehgebers.
Figur 4 zeigt eine seitliche Schnittansicht einer vierten Ausführungsform eines erfindungsgemäßen Drehgebers.
Figur 5 zeigt eine seitliche Schnittansicht einer fünften Ausführungsform eines erfindungsgemäßen Drehgebers.

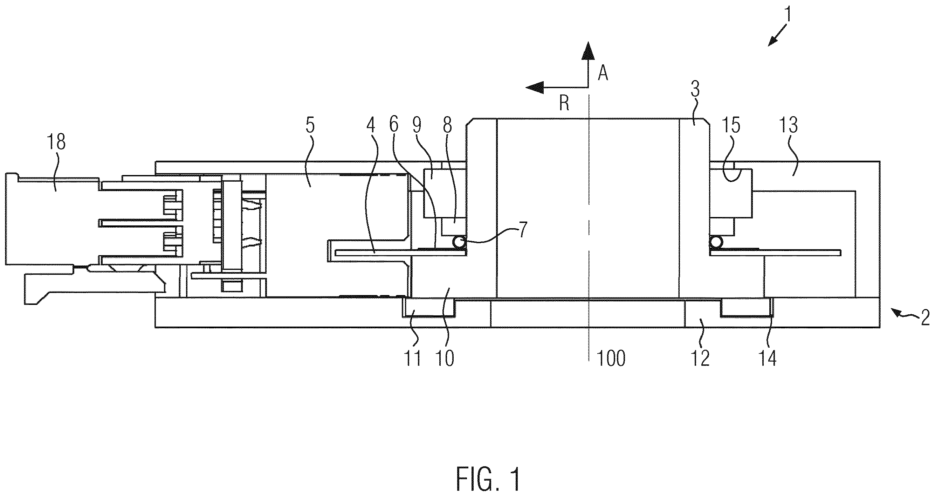

Die in Fig. 1 dargestellte erfindungsgemäße Ausführungsform eines Drehgebers 1 umfasst ein Gehäuse 2, in dem eine um eine Achse 100 rotierbare Welle 3 angeordnet ist. Die Welle 3 erstreckt sich in Axialrichtung A. Auf der Welle 3 ist eine Kodierscheibe 4 befestigt, die in Radialrichtung R von der Welle 3 hervorsteht. Mittels einem Lesekopf 5 kann die Drehung der Kodierscheibe 4 erfasst werden.

Die Kodierscheibe 4 wird durch eine Klemmkraft in Axialrichtung A gegen einen Anschlag 6 gedrückt, der von der Welle 3 bereitgestellt wird. Bei dem Anschlag 6 handelt es sich insbesondere um eine ebene Fläche mit einer Normalen in Axialrichtung A. Der Anschlag 6 erstreckt sich insbesondere gleichförmig um den gesamten Umfang der Welle 3.

In der vorliegenden Ausführungsform ist der Anschlag 6 als ebene Fläche ausgestaltet. In anderen Ausführungsformen ist es aber auch möglich, dass Vorsprünge, wie zum Beispiel Stifte oder andere Formelemente vorgesehen sind, die eine genaue Positionierung der Kodierscheibe in Radial- und/oder Umfangsrichtung ermöglichen.

Die in Axialrichtung A wirkende Klemmkraft zum Festklemmen der Kodierscheibe 4 auf dem Anschlag 6 wird durch ein elastisches Element 7 bereitgestellt bzw. definiert, das in der vorliegenden Ausführungsform direkt auf der Kodierscheibe 4 angeordnet ist. Das elastische Element 7 ist als ein O-Ring aus einem Elastomer-Material ausgestaltet. In Axialrichtung A über dem elastischen Element 7 ist eine Distanzhülse 8 vorgesehen. Die Distanzhülse 8 kann verschiedene Längen in axialer Richtung aufweisen, kann in manchen Ausführungsformen aber auch komplett weggelassen werden.

Über der Distanzhülse 8 ist in Axialrichtung A ein erstes Lager 9 angeordnet, dass Teil der Lagerung der Welle 3 im Gehäuse 2 ist. Das erste Lager 9 ist in der Lage die Klemmkraft in Axialrichtung A auf das Gehäuse 2 zu übertragen. Insbesondere wird die Klemmkraft durch die Einbauhöhe im Gehäuse, die Position des Anschlags auf der Welle 3, die axiale Länge des elastischen Elements 7 sowie des ersten Lagers 9, und gegebenenfalls der Distanzhülse 8 bestimmt, sowie durch die Elastizität bzw. Kompressibilität des elastischen Elements 7.

Der Anschlag 6 wird in der vorliegenden Ausführungsform durch einen Flansch 10 am Ende der Welle 3 bereitgestellt. Damit kann die Welle durch nur einen Drehvorgang hergestellt werden, ohne dass auch auf der Endseite des Flansches 10 eine Drehbearbeitung notwendig wäre. Auch die Innenbohrung der als Hohlwelle ausgestalteten Welle 3 kann durch die Drehbearbeitung erfolgen.

Über den Flansch 10 erfolgt zudem die Lagerung der Welle 3 gegenüber dem Gehäuse 2 mittels eines zweiten Lagers 11, in Form eines Axiallagers. Das zweite Lager 11 ist insbesondere in Form einer Anlaufscheibe ausgestaltet.

Das Gehäuse 2 umfasst einen unteren Gehäuseteil 12 und einen oberen Gehäuseteil 13, wobei die Gehäuseteile 12, 13 jeweils mit einer Öffnung versehen sind, sodass eine Verbindung mit einem externen Bauteil von beiden Seiten der Welle 3 erfolgen kann. Es kann aber auch lediglich eine Öffnung im unteren Gehäuseteil 12 oder im oberen Gehäuseteil 13 vorgesehen sein. Im unteren Gehäuseteil ist vorteilhafterweise eine Lageraufnahme in Form einer ringförmigen Nut 14 zur Aufnahme des zweiten Lagers 11 vorgesehen.

Ansonsten ist der untere Gehäuseteil 12 im Wesentlichen flach ausgestaltet. Der obere Gehäuseteil 13 ist hingegen topfförmig ausgestaltet, sodass die darin enthaltenen Komponenten des Drehgebers 1, insbesondere die Welle 3, die Kodierscheibe 4 und der Lesekopf 5 von äußeren Einwirkungen, insbesondere Staub oder Schmutz bzw. mechanischer Beschädigung geschützt sind.

Im oberen Gehäuseteil 13 ist eine Lageraufnahme 15 vorgesehen, in der das erste Lager 9 aufgenommen ist. Nachdem der Abstand der Lageraufnahmen 14 und 15 durch das Gehäuse 2 zueinander definiert ist, kann durch entsprechende Wahl der Lager 9, 11, des elastischen Elements 7 und optional einer Distanzhülse 8, genau die Klemmkraft vorbestimmt werden, die bei dem fertig montierten Gehäuse 2 auf die Kodierscheibe 4 wirkt.

In einer Ausgestaltung des erfindungsgemäßen Drehgebers 1 kann der untere Gehäuseteil 12 weggelassen werden, und der Drehgeber 1 direkt auf einer Befestigungsfläche angeschraubt werden, auf der insbesondere eine als Anlaufring dienende Fläche oder eine Lageraufnahme für das zweite Lager 11 vorgesehen ist.

Der untere Gehäuseteil 12 und der obere Gehäuseteil 13 werden durch Verschrauben, Verklemmen, Verkleben oder durch Clipelemente miteinander verbunden, sodass das geschlossene Gehäuse 2 entsteht. Zwischen Gehäuse 2 und der Welle 3 und zwischen den Gehäuseteilen 12, 13 und in sonstigen potentiellen Spalten im Gehäuse sind Dichtungen vorgesehen, sodass das Gehäuse 2 flüssigkeits- und staubgeschützt ist. Die Dichtungen können Teil der vorgesehenen Wälzlager sein.

Das Verfahren zur Montage des Drehgebers 1kann beispielhaft an Fig. 1 erläutert werden: Zunächst wird das untere Gehäuseteil 12 bereitgestellt, in das das zweite Lager 11 eingelegt wird. In das zweite Lager 11 wird die Welle 3 angeordnet. Auf die Welle 3 wird nun zunächst die Kodierscheibe 4, dann das elastische Element 7, die Distanzhülse 8 und dann das erste Lager 9 bis zum Anschlag 6 aufgeschoben. Der Lesekopf 5 wird auf dem unteren Gehäuseteil 12 angeordnet. Dann wird der obere Gehäuseteil 13 aufgesetzt und mit dem unteren Gehäuseteil 12 verbunden, insbesondere verschraubt. Dadurch wird ein definierter Abstand zwischen den Lagern 9, 11 vorgegeben, und das elastische Element 7 wird um einen vorbestimmten Weg komprimiert, wodurch eine vorbestimmte Lagervorspannkraft bzw. Klemmkraft für die Kodierscheibe 4 erzeugt wird.

Alternativ kann das Verfahren zur Montage des Drehgebers 1 wie folgt ausgeführt werden: Zunächst wird die Kodierscheibe 4, das elastische Element 7, die Distanzhülse 8 und das erste Lager 9 auf die Welle 3 bis zum Anschlag 6 aufgeschoben. Der Lesekopf 5 wird in das obere Gehäuseteil 13 eingesetzt. Dann wird die Welle 3 mit dem ersten Lager 9 in das obere Gehäuseteil 13 in die Lageraufnahme 15 eingeführt. Gleichzeitig wird die Kodierscheibe 4 in den Lesekopf 5 eingeschoben. Danach wird das zweite Lager 11 in die Lageraufnahme 14 des unteren Gehäuseteils 12 eingelegt. Dann wird der obere Gehäuseteil 13 aufgesetzt und mit dem unteren Gehäuseteil 12 verbunden, insbesondere verschraubt. Dadurch wird ein definierter Abstand zwischen den Lagern 9, 11 vorgegeben, und das elastische Element 7 wird um einen vorbestimmten Weg komprimiert, wodurch eine vorbestimmte Lagervorspannkraft bzw. Klemmkraft für die Kodierscheibe 4 erzeugt wird.

Weiter alternativ ist es beispielsweise auch möglich, die Montage in der umgekehrten Reihenfolge vorzunehmen, indem zunächst das Lager 9, die Distanzhülse 8, das elastische Element 7 und die Kodierscheibe 4 in dem oberen Gehäuseteil 13 angeordnet werden, und dann die Welle 3 in diese Komponenten eingeschoben wird. Dann wird das zweite Lager 11 und der untere Gehäuseteil 12 in Position gebracht und die Gehäuseteile 12, 13 verbunden.

Weiter alternativ wird das Lager 9 auf den oberen Gehäuseteil 13 gepresst. Die Kodierscheibe 4, das elastische Element 7 und die Distanzhülse 8 werden auf die Welle 3 gesteckt. Dann wir Welle 3 gleichzeitig mit dem Lesekopf 5 auf das Lager 9 und somit das Gehäuseoberteil 13 gefügt. Dann wird das zweite Lager 11 und der untere Gehäuseteil 12 in Position gebracht und die Gehäuseteile 12, 13 verbunden.

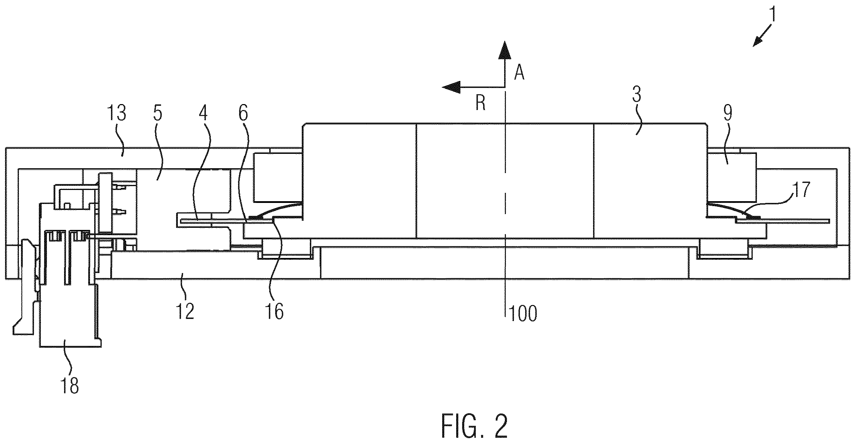

In Fig. 2 bis 5 werden weitere Ausführungsformen von erfindungsgemäßen Drehgebern 1 dargestellt, wobei im Folgenden vornehmlich die Unterschiede zur ersten Ausführungsform erläutert werden:
In der Ausführungsform gemäß Fig. 2 weist der Anschlag 6 ein Positionierelement 16 auf, in Form eines umlaufenden Vorsprungs, wodurch die innere Öffnung der Kodierscheibe 4 entkoppelt vom Lager- bzw. Wellendurchmesser gewählt und zentriert werden kann.

In Ergänzung oder unabhängig davon ist ein elastisches Element 17 in Form einer Tellerfeder vorgesehen, die eine elastische Klemmkraft in Axialrichtung A direkt zwischen dem ersten Lager 9 und der Kodierscheibe 4 aufbringt. Während in der ersten Ausführungsform gemäß Fig. 1 die Steckverbindung 18 des Lesekopf 5 seitlich zwischen den Gehäuseteilen 12 und 13 nach außen ragt, ist diese in der Ausführungsform gemäß Fig. 2 durch eine Öffnung des unteren Gehäuseteils 12 nach unten gerichtet. Insgesamt ergibt sich bei der zweiten Ausführungsform gemäß Fig. 2 eine in Axialrichtung kompakte Ausgestaltung, wobei dennoch eine hohe Klemmkraft durch den Einsatz des elastischen Elements 17 in Form der Tellerfeder erreicht werden kann.

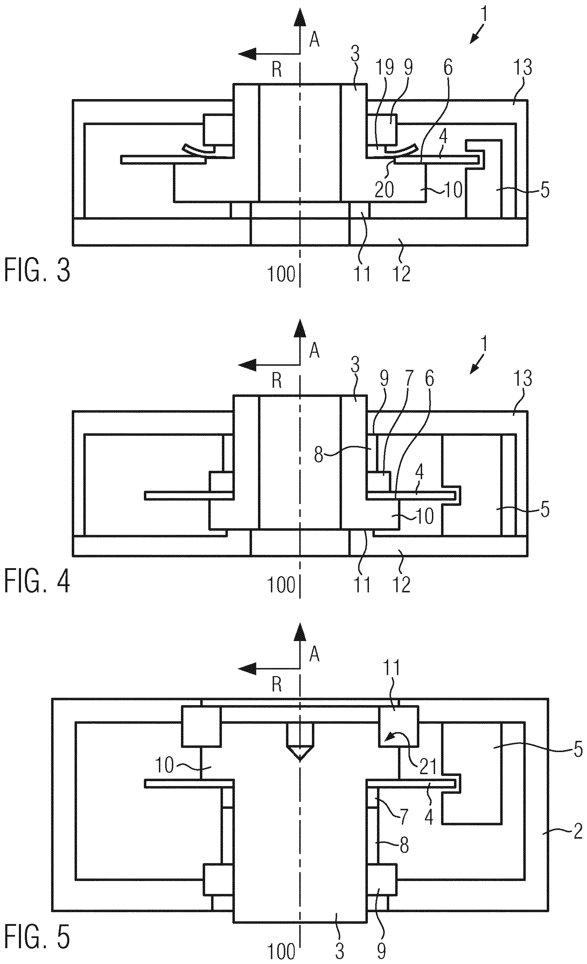

In Fig. 3 wird eine weitere Ausführungsform eines erfindungsgemäßen Drehgebers dargestellt, wobei hier ein elastisches Element 19 in Form einer Absatzscheibe vorgesehen ist, die an ihrem radial inneren Ende zwischen dem ersten Lager 9 und dem einteilig mit der Welle 3 ausgebildeten Flansch 10 festgeklemmt ist. Das radial äußere Ende der Absatzlasche ist so elastisch verformt, dass es die Klemmkraft zur Festlegung der Kodierscheibe 4 bereitstellt. In dieser Ausführungsform ist die Klemmkraft für die Kodierscheibe 4 unabhängig von der Vorspannkraft der Lager 9, 11. Insbesondere ist das elastische Element 19 in Form der Absatzscheibe aus einem metallischen Material gefertigt. Die Absatzscheibe hat in ihrem inneren Bereich eine wenigstens doppelt so große Dicke als in ihrem radial äußeren Bereich.

Anstelle einer Absatzscheibe kann auch lediglich eine Beilagscheibe, also ein flaches Element ohne Absatz, als elastisches Element vorgesehen werden, die durch elastische Verformung entsprechend eine Klemmkraft auf die Kodierscheibe 4 aufbringt. Vorteilhafterweise kann radial innerhalb des Anschlags 6 eine Stufe 20 im Flansch 10 vorgesehen sein, um die notwendige Verformung des elastischen Elements zu reduzieren und die Kodierscheibe 4 zu zentrieren. Das erste Lager 9 ist vorteilhafterweise ein Gleitlager. Somit kann auch bei einem großen Durchmesser des elastischen Elements 19 in Form einer Absatzscheibe oder Beilagscheibe verhindert werden, dass der Außenring eines Wälzlagers in unerwünschten Reibkontakt mit dem elastischen Element 19 kommt.

In der weiteren Ausführungsform des erfindungsgemäßen Drehgebers 1 gemäß Fig. 4 werden die Lager 9, 11 jeweils direkt durch Gleitflächen im Gehäuse 2 bereitgestellt. Der Flansch 10 der Welle 3 läuft direkt auf einer Gleitfläche des Gehäuseunterteils 12, und die Distanzhülse 8 läuft direkt auf einer Gleitfläche des Gehäuseoberteils 13. Zwischen der Distanzhülse 8 und der Kodierscheibe 4 ist wiederum ein elastisches Element 7 vorgesehen, das die Lagerkraft in Axialrichtung A und entsprechend die Klemmkraft für die Kodierscheibe 4 bedingt.

In der Ausführungsform gemäß Fig. 5 ist eine Lagerung der Welle 3 über das erste Lager 9 und das zweite Lager 11 dargestellt, die jeweils als Wälzlager ausgestaltet sind. Dafür weist die Welle 3 einen zurückgesetzten Flanschbereich 21 auf, in dem das zweite Lager 11 angeordnet ist. Die Klemmkraft für die Festlegung der Kodierscheibe 4 wird wiederum vom Gehäuse 2 über das erste Lager 9 und die Distanzhülse 8 sowie das elastische Element 7 auf die Kodierscheibe 4 aufgebracht.

Alternativ kann das zweite Lager 11 auch auf einem Sicherungsring angeordnet werden, der in dem Flanschbereich 21 angeordnet ist. Dafür kann das zweite Lager 11 einen Innendurchmesser aufweisen, der dem Außendurchmesser des Flanschs 10 entspricht.

## Patentansprüche

1. Drehgeber (1), umfassend:
ein Gehäuse (2),
eine Welle (3), wobei die Welle (3) einen Anschlag (6) auf der Welle (3) aufweist, ein elastisches Element (7, 17, 19), eine Kodierscheibe (4), die auf der Welle (3) befestigt ist, und
einen Lesekopf (5), der ausgelegt ist, die Drehung der Kodierscheibe (4) zu erfassen,
**dadurch gekennzeichnet, dass**
die Kodierscheibe (4) auf einer axialen Seite durch den Anschlag (6) auf der Welle (3) in ihrer axialen Position festgelegt wird, und
dass auf der anderen axialen Seite das elastische Element (7, 17, 19) vorhanden ist, das eine Klemmkraft bereitstellt, mit der die Kodierscheibe (4) gegen den Anschlag (6) gedrückt wird.

2. Drehgeber nach Anspruch 1, wobei sich das elastische Element (7, 17, 19) in Umfangsrichtung um die Welle (3) erstreckt.

3. Drehgeber nach Anspruch 1 oder 2, wobei ein erstes Lager (9) der Welle (3) so angeordnet ist, dass die Klemmkraft über das elastische Element (7, 17) und das erste Lager (9) in das Gehäuse (2) eingeleitet wird.

4. Drehgeber nach Anspruch 3, wobei zwischen dem elastischen Element (7, 17) und dem ersten Lager (9) eine Distanzhülse (8) vorgesehen ist, die sich zylindrisch um die Welle (3) erstreckt.

5. Drehgeber nach einem der vorangehenden Ansprüche, wobei die Welle (3) eine Hohlwelle ist.

6. Drehgeber nach einem der vorangehenden Ansprüche, wobei der Anschlag (6) durch einen Absatz in der Welle (3) bereitgestellt wird.

7. Drehgeber nach einem der Ansprüche 1 bis 6, wobei der Anschlag (6) ein Distanzring ist, der insbesondere auf einem Absatz in der Welle (3) angeordnet ist.

8. Drehgeber nach einem der vorangehenden Ansprüche, wobei die Welle (3) mit dem ersten Lager (9) als Radiallager gegenüber einem oberen Gehäuseteil (13) des Gehäuses (2) gelagert ist, und auf der gegenüberliegenden Seite mit einem zweiten Lager (11) als Axiallager gegenüber einem unteren Gehäuseteil (12).

9. Drehgeber nach Anspruch 8, wobei das zweite Lager (11) als Gleitlager in Form einer aus einer Lageraufnahme (14) im unteren Gehäuseteil (12) vorstehenden Anlaufscheibe ausgebildet ist.

10. Drehgeber nach Anspruch 8 oder 9, wobei das erste Lager (9) eine Gleitlagerung der Welle (3) im oberen Gehäuseteil (13) ist, und wobei die Klemmkraft durch eine Distanzhülse (8) in die Gleitlagerung eingeleitet wird.

11. Drehgeber nach einem der Ansprüche 8 bis 10, wobei der Lesekopf (5) zwischen dem oberen Gehäuseteil (13) und dem unteren Gehäuseteil (12) angeordnet ist.

12. Drehgeber nach einem der vorangehenden Ansprüche, wobei ein Flansch (10) an einem Ende der Welle (3) vorgesehen ist, wobei der Flansch (10) mittels eines Axiallagers gegenüber dem Gehäuse (2) gelagert wird, und wobei die Rückseite des Flansches (10) den Anschlag (3) bereitstellt.

13. Drehgeber nach einem der vorangehenden Ansprüche, wobei das elastische Element (7) ein ringförmiges oder zylindrisches Elastomerelement ist.

14. Drehgeber nach einem der vorangehenden Ansprüche, wobei das elastische Element (17, 19) eine Tellerfeder oder Fingerfeder ist, in deren zentralen Öffnung die Welle (3) angeordnet ist.

15. Verfahren zur Montage eines Drehgebers (1), umfassend die Schritte:
(i) Bereitstellen eines unteren Gehäuseteils (12) mit einem unteren Lager (11),
(ii) Anordnen einer Kodierscheibe (4), eines elastischen Elements (7, 17, 19) und eines oberen Lagers (9) auf einer Welle (3),
(iii) Einbringen der Welle (3) in einen oberen Gehäuseteil (13),
(iv) Anordnen und Befestigen des oberen Gehäuseteils (13) auf dem unteren Gehäuseteil (12), sodass die Welle (3) durch das obere Lager (9) und das untere Lager (11) gelagert ist, und durch das obere Lager (9) eine Klemmkraft über das elastische Element (7, 17, 19) aufgebracht wird, sodass die Kodierscheibe (4) gegen einen Anschlag (6) auf der Welle (3) gedrückt wird.

## Claims

1. A rotary encoder (1), comprising:
a housing (2),
a shaft (3), wherein the shaft (3) has an abutment (6) on the shaft (3),
a resilient element (7, 17, 19),
a code disk (4) which is attached to the shaft (3), and
a reading head (5) which is configured to detect the rotation of the code disk (4),
**characterized in that**
the code disk (4) is affixed in an axial position on one axial side by the abutment (6) on the shaft (3) and the resilient element (7, 17, 19) is arranged on another axial side of the code disk (4) and provides a clamping force with which the code disk (4) is pressed against the abutment (6).

2. Rotary encoder according to claim 1, wherein the resilient element (7, 17, 19) extends in a circumferential direction around the shaft (3).

3. Rotary encoder according to claims 1 or 2, wherein a first bearing (9) of the shaft (3) is arranged such that the clamping force is introduced via the resilient element (7, 17) and the first bearing (9) into the housing (2).

4. Rotary encoder according to claim 3, comprising a spacer sleeve (8) between the resilient element (7, 17) and the first bearing (9) which extends cylindrically around the shaft (3).

5. Rotary encoder according to any one of the previous claims, wherein the shaft (3) is a hollow shaft.

6. Rotary encoder according to any one of the previous claims, wherein the abutment (6) is provided by a shoulder in the shaft (3).

7. Rotary encoder according to one of the claims 1 to 6, wherein the abutment (6) is a spacer ring, which is in particular arranged on a shoulder in the shaft (3).

8. Rotary encoder according to any one of the previous claims, wherein the shaft (3) is mounted with respect to a housing upper part (13) of the housing (2) with the first bearing (9) configured as a radial bearing, and wherein the shaft (3) is mounted with respect to a housing lower part (12) of the housing (2) on an oppositely disposed side of the shaft (3) with a second bearing (11) configured as an axial bearing.

9. Rotary encoder according to claim 8, wherein the second bearing (11) is configured as a sliding bearing in the form of a thrust washer protruding from a bearing seat (14) in the housing lower part (12).

10. Rotary encoder according to claims 8 or 9, wherein the first bearing (9) is a sliding bearing of the shaft (3) in the housing upper part (13), and wherein the clamping force is introduced into the sliding bearing through a spacer sleeve (8).

11. Rotary encoder according to one of the claims 8 to 10, wherein the reading head (5) is arranged between the housing upper part (13) and the housing lower part (12).

12. Rotary encoder according to any one of the previous claims, comprising a flange (10) at one end of the shaft (3), wherein the flange (10) is mounted with respect to the housing (2) by way of an axial bearing, and wherein a rear side of the flange (10) provides the abutment (3).

13. Rotary encoder according to any one of the previous claims, wherein the resilient element (7) is an annular or cylindrical elastomer element.

14. Rotary encoder according to any one of the previous claims, wherein the resilient element (17, 19) is a disk spring or finger spring having a central opening therein, wherein the shaft (3) is arranged in the central opening.

15. Method for assembling a rotary encoder (1), comprising the steps of:
(i) providing a housing lower part (12) with a lower bearing (11),
(ii) arranging a code disk (4), a resilient element (7, 17, 19) and an upper bearing (9) on a shaft (3),
(iii) introducing the shaft (3) into a housing upper part (13),
(iv) arranging and attaching the housing upper part (13) to the housing lower part (12) so that the shaft (3) is mounted by the upper bearing (9) and the lower bearing (11), and a clamping force is applied by the upper bearing (9) via the resilient element (7, 17, 19) so that the code disk (4) is pressed against an abutment (6) on the shaft (3).

## Revendications

1. Capteur de rotation (1), comprenant :
un boîtier (2) ;
un arbre (3), dans lequel l'arbre (3) présente une butée (6) située sur l'arbre (3),
un élément élastique (7, 17, 19),
un disque de codage (4) fixé sur l'arbre (3), et
une tête de lecture (5) conçue pour détecter la rotation du disque de codage (4),
**caractérisé en ce que**
le disque de codage (4) est fixé dans sa position axiale sur un côté axial grâce à la butée (6) située sur l'arbre (3), et
**en ce que** l'élément élastique (7, 17, 19), qui fournit une force de serrage au moyen de laquelle le disque de codage (4) est comprimé contre la butée (6), est présent sur l'autre côté axial.

2. Capteur de rotation selon la revendication 1, dans lequel l'élément élastique (7, 17, 19) s'étend dans la direction circonférentielle autour de l'arbre (3).

3. Capteur de rotation selon la revendication 1 ou 2, dans lequel un premier palier (9) de l'arbre (3) est agencé de sorte que la force de serrage est introduite dans le boîtier (2) par l'intermédiaire de l'élément élastique (7, 17) et du premier palier (9).

4. Capteur de rotation selon la revendication 3, dans lequel un manchon d'espacement (8) s'étendant de manière cylindrique autour de l'arbre (3) est fourni entre l'élément élastique (7, 17) et le premier palier (9).

5. Capteur de rotation selon l'une quelconque des revendications précédentes, dans lequel l'arbre (3) est un arbre creux.

6. Capteur de rotation selon l'une quelconque des revendications précédentes, dans lequel la butée (6) est fournie par un épaulement de l'arbre (3).

7. Capteur de rotation selon l'une quelconque des revendications 1 à 6, dans lequel la butée (6) est une bague d'espacement agencée en particulier sur un épaulement de l'arbre (3).

8. Capteur de rotation selon l'une quelconque des revendications précédentes, dans lequel l'arbre (3) est monté avec le premier palier (9) sous forme de palier radial par rapport à une partie supérieure de boîtier (13) du boîtier (2), et est monté sur le côté opposé avec un second palier (11) sous forme de palier axial par rapport à une partie inférieure de boîtier (12).

9. Capteur de rotation selon la revendication 8, dans lequel le second palier (11) est réalisé en tant que palier lisse sous la forme d'un heurtequin faisant saillie dans la partie inférieure de boîtier (12) à partir d'un logement de palier (14).

10. Capteur de rotation selon la revendication 8 ou 9, dans lequel le premier palier (9) est un palier lisse de l'arbre (3) dans la partie supérieure de boîtier (13), et dans lequel la force de serrage est introduite dans le palier lisse grâce à un manchon d'espacement (8).

11. Capteur de rotation selon l'une quelconque des revendications 8 à 10, dans lequel la tête de lecture (5) est agencée entre la partie supérieure de boîtier (13) et la partie inférieure de boîtier (12).

12. Capteur de rotation selon l'une quelconque des revendications précédentes, dans lequel une bride (10) est fournie à une extrémité de l'arbre (3), dans lequel la bride (10) est montée par rapport au boîtier (2) au moyen d'un palier axial, et dans lequel la face arrière de la bride (10) fournit la butée (3).

13. Capteur de rotation selon l'une quelconque des revendications précédentes, dans lequel l'élément élastique (7) est un élément élastomère annulaire ou cylindrique.

14. Capteur de rotation selon l'une quelconque des revendications précédentes, dans lequel l'élément élastique (17, 19) est un ressort à disque ou un ressort à boudin, dans l'ouverture centrale duquel l'arbre (3) est agencé.

15. Procédé d'assemblage d'un capteur de rotation (1), comprenant les étapes consistant à :
(i) fournir une partie inférieure de boîtier (12) comprenant un palier inférieur (11),
(ii) agencer un disque de codage (4), un élément élastique (7, 17, 19) et un palier supérieur (9) sur un arbre (3),
(iii) insérer l'arbre (3) dans une partie supérieure de boîtier (13),
(iv) agencer et fixer la partie supérieure de boîtier (13) sur la partie inférieure de boîtier (12), de sorte que l'arbre (3) est supporté grâce au palier supérieur (9) et au palier inférieur (11) et qu'une force de serrage est appliquée grâce au palier supérieur (9) par l'intermédiaire de l'élément élastique (7, 17, 19), de sorte que le disque de codage (4) est pressé contre une butée (6) située sur l'arbre (3).
